(19) Europäisches Patentamt
European Patent Office
Office européen des brevets

(11) Publication number: **0 137 326 B1**

(12) # EUROPEAN PATENT SPECIFICATION

(45) Date of publication of patent specification: **13.12.89**

(51) Int. Cl.$^4$: **A 23 L 1/236**, A 23 L 1/22

(21) Application number: **84110818.6**

(22) Date of filing: **11.09.84**

(54) **Sweetener composition stable against heat.**

(30) Priority: **12.09.83 US 531327**
**25.07.84 US 633182**

(43) Date of publication of application:
**17.04.85 Bulletin 85/16**

(45) Publication of the grant of the patent:
**13.12.89 Bulletin 89/50**

(84) Designated Contracting States:
**BE CH DE FR GB IT LI NL SE**

(56) References cited:
**EP-A-0 053 844**
**EP-A-0 097 950**
**GB-A-1 511 392**

(73) Proprietor: **THE NUTRASWEET COMPANY (a Delaware corporation)**
**1751 Lake Cook Road**
**Deerfield Illinois 60015 (US)**

(72) Inventor: **Tsau, Josef Heng-ko**
**5348 Brummel Street**
**Skokie, Il. 60077 (US)**
Inventor: **Young, James George**
**2729 Oak Avenue**
**Northbrook, Il.60062 (US)**

(74) Representative: **Beil, Hans Chr., Dr. et al**
**Beil, Wolff und Beil, Rechtsanwälte**
**Adelonstrasse 58 Postfach 80 01 40**
**D-6230 Frankfurt am Main 80 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 137 326 B1

**Description**

Background of the invention

1-methyl N-L-α-aspartyl-L-phenylalanine (APM) is a widely used sweetener. Its preparation and use are described in U.S. Patents 3,492,131 and 3,642,491 and in EP—A—0053844. FDA regulations 21 CFR 172.804(c)(3) provide that when APM is used as a sugar substitute for table use, its label shall bear instructions "not to use in cooking or baking". This label warning was required by the FDA because APM was found to be unstable when heated. For example, APM would decompose in typical baking situations such as making cakes, cookies, breads and the like.

This invention solves the problem of APM's instability during baking.

Brief description of the invention

APM, salts and metal complexes thereof are protected during the baking process by coating the sweetener with a partially hydrogenated vegetable oil. It is important that the APM, salts or metal complexes thereof and partially hydrogenated vegetable oil be formed into 0,42—2,38 mm particle size, so that APM will be released in the later part of the baking cycle.

Preferably an APM sweetener is first granulated to 0,177 to 1,41 mm sizes and most preferably to 0,595 to 1,41 mm sizes and then are coated to form 0,42—2,38 mm granules (with a partially hydrogenated vegetable oil). Thus the invention encompasses a heat stable sweetening composition comprising 0,42—2,38 mm particles containing APM salt or metal complexes thereof and 30—90% by weight of partially hydrogenated vegetable oil melting above 49°C (120°F).

The invention utilizes the principle that solid APM is significantly more stable than APM in solution. Coating with compatible fat will prevent APM from dissolving, thus stabilized, during preparation and baking. Both the type of the fat and the particle size of fat coated APM have been found to be critical. The melting point of the fat is also an important factor for both stabilizing APM in baking and making a granular product.

Detailed description of the invention

1-methyl N-L-α-aspartyl-L-phenylalanine (APM) has the following chemical formula

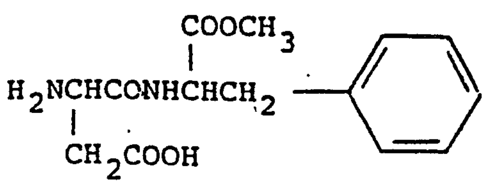

Salts of APM are also effective sweeteners of generally greater stability than APM itself. Tyical salts are: sulfate, and lower alkyl sulfonate wherein the lower alkyl group contains 1—4 carbon atoms. Preferred salts are: Bis(hydrogen aspartyl phenylalanine methyl ester) sulfate represented by the formula $(APM \cdot H)_2SO_4$; hydrogen aspartyl phenylalanine methyl ester methyl sulfonate, represented by the formula $(APM \cdot H)SO_3CH_3$.

Metal complexes of APM are likewise more stable in the solid state than APM alone. Typical metal complexes are derived from *pharmacologically acceptable* metal ions and anions. Typical metal ions are $Ca^{++}$, $Zn^{++}$, $Mg^{++}$, $Al^{+++}$, $Fe^{++}$ and $Fe^{+++}$ and typical anions are chloride, acetate, sulfate, and phosphate. Preferred aspartyl phenylalanine methyl ester (APM) metal complexes are:

$Mg^{++}$ APM-2Cl
$Fe^{+++}$ APM-3Cl
$Al^{+++}$ 2APM-3Cl
$Ca^{++}$ APM-2Cl
$Zn^{++}$ APM-2Cl

It has been found that APM, its salts and metal complexes can be protected by fats during the baking cycle, particularly by partially hydrogenated vegetable oils melting above 49°C (120°F).

Partially hydrogenated triglyceride vegetable oils such as soybean, palm, cottonseed oils melting above 49°C (120°F) are preferred fats useful in practicing the invention. Typically about 3—9 parts by weight of fat are used to coat 7—1 parts by weight of APM, its salts or metal complexes.

The APM, its salt or metal complex is coated with fat by either melting the fat and adding APM or by intermixing APM and fat prior to melting the fat. The fat is allowed to harden and the mass of fat coated particles is filtered through standard mesh screen to obtain fat coated APM particles in the size range of about 0.42—2.38 mm.

An ideal coating is not only compatible with APM but also has a melting point about 100°C to release aspartame until the end of baking cycle. However, a mechanism other than melting fat is needed to slow

down the release of APM during baking. This can be accomplished by increasing fat coating thickness and/or the particle size of the baking product to increase the diffusing time of the melted fat into the matrix of cake.

Therefore, particle size is important because it provides controlled release of APM at the end of the baking cycle. If the particle size is too small, the APM will be released early in the baking cycle and will be thermally decomposed. If the particle size is too large, sweetness will not be thoroughly released and distributed. Therefore, the particle size, the type and the melting point of the fat are critical.

It has been found advantageous to include acidic polydextrose with the APM during the fat coating process when the product will be used to sweeten baked goods with high pH environment such as a chocolate cake. The polydextrose is in the amount of 3 to 8 parts of APM.

The invention is further illustrated by the following examples.

Example 1

Granule preparation

Method I

30 parts of partially hydrogenated triglyceride soy bean oil melting at 66—70°C (151—158°F) is melted in a flat bottom pan. 10 parts of APM is gradually added so the powder is coated by the melted oil. Heating is discontinued and 60 parts of polydextrose powder is dispersed in the melted oil by stirring. The mass is stirred during solidification to produce small granules. The granules are separated on a screen with 0,841 mm openings. This method is applicable when using 10—30 parts of fat.

Method II

Polydextrose—APM non-porous granules[a] are made by adding a solution of 400 parts of polydextrose dissolved in 150 parts by volume of hot water to 600 parts of APM with stirring and drying by heating until substantially dry granules are formed. The granules are passed through a screen with 0,595 mm openings.

Method III

3 parts of APM and 2 parts of polydextrose were mixed and granulated in a high-speed stirring granulator using water (6—10% by weight) granulation solvent and heat to facilitate granulation. The granules were tray dried and screened to 0,595—1,41 mm mesh openings distribution. The above granule was coated with 50% Duratex using a fluid-bed granulator which has a heating and pumping system to melt and spray high melting point fats. Part of the coated granules were screened to 1,41—1,68 mm and 1,19—1,68 mm samples.

These granules are coated with fat by mixing 50 parts of the granules with 50 parts of fine powder fat and slowly heating with stirring until the granules are coated. The coated granules are passed through a screen with both 2,0 and 0,841 mm openings.

Both Methods I, II and III are applicable when no polydextrose is used. For example, APM may itself be granulated or mixed with other granulating agents.

The heat stabilized compositions of the present invention may be utilized as in one or more of the following Examples.

---

[a] The porous granules were prepared by mixing APM with granulating compounds, such as polydextrose or maltrin M100, and water or water-alcohol mixture to make a dough, which was expanded and dried in vacuum oven at 80°C. The dried product was then milled to granular powder.

Example 2

The formulations of cakes used in the following examples:

| Ingredient | Yellow cake* APM | Yellow cake* Sugar | Chocolate cake APM | Chocolate cake Sugar |
|---|---|---|---|---|
| Sugar | — | 200 | — | 206 |
| APM | 1.2 | — | 1.2 | — |
| Maltrin M100 | 115 | — | 200 | — |
| Flour | 154 | 165 | 147 | 147 |
| Cocoa powder | — | — | 56 | 56 |
| Baking powder | 6.8 | 6.8 | 1.2 | 1.2 |
| Baking soda | — | — | 3.1 | 3.3 |
| Salt | 3.4 | 3.5 | 3.6 | 3.6 |
| Shortening | 50 | 55.6 | 36 | 42 |
| Water | — | — | 92 | 92 |
| Milk | 194 | 180 | — | — |
| Buttermilk | — | — | 99 | 99 |
| Egg | 54 | 70 | 54.5 | 54.5 |
| Vanilla | 3.1 | 4.2 | 1.8 | 1.8 |

*Polydextrose—APM yellow cake: The same as APM yellow cake except Maltrin M100 is replaced by the same amount of polydextrose.

Example 3

Compatibility between different types of fats and APM compounds.

The following results were obtained by the analysis of fat coated samples. Unheated samples were used as controls to determine high-temperature compatibility. For all samples the weight ratio was 9:1 (fat:APM compound). The samples were heated at 110°C for 40 minutes. APM was extracted from a fat coated sample using solvent-solvent (0.01 N HCl—methylene chloride) extraction and determined by a High Performance Liquid Chromatographic (HPLC) method.

| Composition (wt ratio) | APM content (%) Control sample | Heated sample | % Degradation |
|---|---|---|---|
| Duratex(9), APM(1) | 9.96 | 9.33 | 6.3 |
| Durkee 17(9), APM(1) | 10.40 | 8.40 | 18.7 |
| KLX(9), APM(1) | 10.20 | 8.50 | 16.7 |
| Aratex(9), APM(1) | 9.60 | 9.74 | 0 |
| Kaomel(9), APM(1) | 9.84 | 8.74 | 11.2 |
| Duratex(9), $(APM \cdot H)_2SO_4$(1) | 7.32 | 7.24 | 1.1 |
| Atmos K150(9), APM(1) | 9.25 | 3.92 | 57.6 |
| Myverol(9), APM(1) | 9.60 | 0 | 100 |
| Glycerol Monosterate(9), APM(1) | 7.65 | 2.23 | 70.9 |
| Stearic acid(9), APM(1) | 9.36 | 0 | 100 |
| Stearic acid(9), $(APM \cdot H)_2SO_4$ | 8.37 | 2.60 | 68.9 |

This study demonstrates that triglyceride fats have the best compatibility with APM compounds at high temperature and are preferred for use in coatings.

Example 4

Temperature profiles of cakes during baking

The temperature inside of a cake during baking was monitored and recorded every minute using a thermocouple inside the cake.

Results show that at the end of 40 minutes baking period the cake temperature plateaus at ~112—120°C. Therefore, the maximum temperature of a baking cake is significantly lower than the degradation temperatures of APM (160°C), $(APM \cdot H)_2SO_4$ (180°C), and $APM \cdot CaCl_2$ (~175°C) in solid form. Therefore, if these sweeteners can be kept in solid form, e.g., by fat coating to prevent them from dissolving in water, they are stabilized during baking.

Example 5
Summary of assay results by an HPLC method for yellow cup cakes

| Spl No. | Composition of sweetener (wt ratio) | Coating method / Particle size (mm) | APM Recovered (%) | % Degradation DKP* | % Degradation AP* | Relative recovery % of APM | Remark |
|---|---|---|---|---|---|---|---|
| 1. | APM | | 38.3 | 30.5 | 8.7 | 49.4 | Control |
| 2. | APM | | 31.1 | 34.1 | 8.5 | 42.2 | Control |
| 3. | APM(1), Durkee 17(3), Polydextrose (6) | I/≤0.841 | 62.2 | 25.0 | 3.4 | 68.7 | |
| 4. | APM(1), Duratex(3), Polydextrose (6) | I/≤0.841 | 53.2 | 20.3 | 2.9 | 69.6 | |
| 5. | APM(1), KLX(3), Polydextrose(6) | I/≤0.841 | 56.7 | 32.4 | 4.6 | 60.5 | |
| 6. | (APM · H)$_2$SO$_4$(1), Durkee 17(3), Polydextrose(6) | I/≤0.841 | 50.1 | 14.5 | 3.2 | 73.9 | |
| 7. | APM · CaCl$_2$(1), Durkee 17(2), Polydextrose(5) | I/≤0.841 | 50.1 | 15.2 | 3.3 | 73.0 | |
| 8. | (APM · H)$_2$SO$_4$ · (3), Durkee 17(8), Polydextrose(12) Maltrin M100(2) | I/≤0.841 | 45.2 | 14.4 | 2.8 | 72.4 | |
| 9. | Granule A [(APM · H$_2$SO$_4$(3), Polydextrose(3), Maltrin M100(4) | /≤0.595 | 40.8 | 27.5 | 7.2 | 54 | Control |
| 10. | Granule (A)2, Duratex(3) | II/≤2,0 | 61.8 | 16.3 | 3.3 | 75.9 | |

Example 5 (Cont.)

| Spl No. | Composition of sweetener (wt ratio) | Coating method Particle size (mm) | APM Recovered (%) | % Degradation DKP* | AP* | Relative recovery % of APM | Remark |
|---|---|---|---|---|---|---|---|
| 11. | Granule B [APM(1), Polydextrose(2), Maltrin M100(2)](1), Duratex(1) | II/≤2,0 | 52.0 | 28.2 | 4.2 | 61.6 | |
| 12. | Granule C [($APM \cdot H)_2SO_4$(1.1), Polydextrose(1), Maltrin M100(1)](5), Duratex(3) | II/≤0,841 | 60.5 | 13.7 | 1.6 | 79.8 | |
| 13. | Granule C(1), Duratex(1) | II/≤0,841 | 61.9 | 15.2 | — | ~80.3 | |
| 14. | Granule C(1), Duratex(1) | II/≤2,0 ≥0,841 | 68.5 | 12.2 | — | ~84.9 | |
| 15. | Granule C(2), Duratex(3) | II/≥0,841 ≤2,0 | 60.3 | 23.5 | 2.71 | 69.7 | |
| 16 | Granule C(1), Duratex(1) Polydextrose cake | II/≥0,841 ≤2,0 | 80.1 | 11.7 | — | 87.2 | The cake has a sour and bitter taste |

* DKP is diketopiperazine degradation product of APM.

** AP aspartyl phenylalanine, a minor thermal degradation product of APM.

The above results indicate that:

(1) The combination of fat coating and a micro-environment of polydextrose, which is acidic, has enhanced the stability of APM in baking by 20% or more.

(2) Using compounds such as $(APM \cdot H)_2SO_4$ and $APM \cdot CaCl_2$, which have better thermal stability than APM, instead of APM has significantly reduced the degradation to DKP.

(3) The higher melting fats, Durkee 17 and Duratex, are somewhat better than the lower melting one, KLX.

(4) In the studies with Granule C the best results are obtained with a 50% Duratex coating and a uniform particle size between 0,841 and 2,0 mm.

Example 6

Summary of assay HPLC results for APM in chocolate cupcakes

| Spl No. | Composition of sweetener (wt ratio) | Coating method / Particle size (mm) | APM recovery (%) | % Degradation DPK* | Relative recovery % of APM | Remark |
|---|---|---|---|---|---|---|
| 1. | APM | | 11.0 | 46.5 | ~19.1 | Control |
| 2. | APM | · | 17.1 | 63.6 | ~21.2 | Control |
| 3. | Granule B [APM(1), Polydextrose (2), Maltrin M100(2)](1), Duratex(1) | II/≤2,0 | 26.0 | 45.1 | ~36.6 | |
| 4. | Granule A [$(APM \cdot H)_2SO_4$(3), Polydextrose(3), Maltrin M100(4)] | /≤0,595 | 13.1 | 53.1 | ~19.8 | Control |
| 5. | Granule A(2) Duratex(3) | II/≤2,0 | 30.4 | 42.0 | ~42.0 | |
| 6. | $APM \cdot CaCl_2$(1) Durkee 17(2), Polydextrose(5) | I/≤2,0 | 40.4 | 38.9 | ~50.9 | |

Example 6 (Cont.)

| Spl No. | Composition of sweetener (wt ratio) | Coating method / Particle size (mm) | APM recovery (%) | % Degradation DPK* | Relative recovery % of APM | Remark |
|---|---|---|---|---|---|---|
| 7. | Granule C [APM · $H_2SO_4$(1.1), Polydextrose(1) Maltrin M100 (1)](5) Duratex(3) | II/≤0,841 | 40.2 | 40.1 | ~50.1 | |
| 8. | Granule C(3) Duratex(1) | II/≤0,841 | 46.0 | 47.6 | ~49.1 | |
| 9. | Granule C(1), Duratex(1) | II/≥0,841 ≤2,0 | 67.2 | 34.2 | 66.3 | |
| 10. | Granule C(2), Duratex(3) | II/≥0.841 ≤2,0 | 59.5 | 30.2 | 66.3 | |

The results show that:

1. Significantly increased APM surviving rates were found in all cakes using fat-coated APM sweetener.
2. The effects of both coating thickness and particle size on APM surviving rate in chocolate cake is even more profound than in yellow cake (Spl Nos. 8, 9, and 10).
3. The optimum results found for granule C samples are 50% fat-coating with a uniform particle size between 0,841 and 2,0 mm as used in yellow cake.

Example 7
Sensory evaluation results
Cupcakes made with different APM samples and baked simultaneously were evaluated for sweetness by 7 or more panelists.

| Study No. | Cake | Composition of sweetener | Coating method: Particle size (mm) | Sweetener | Less sweet | Least sweet | Equal sweet |
|---|---|---|---|---|---|---|---|
| 1 | Choc. | $(APM \cdot H)_2SO_4$(1), Durkee 17(3), Polydextrose(6) Spl A. | I/≤0,841 | 1 | 7 | — | 2 |
| | | $(APM \cdot H)_2SO_4 \cdot CaSO_4$(3), Durkee 17(3), Polydextrose(12), Maltrin M100 (2)-Spl B | I/≤0,841 | 7 | 1 | — | 2 |
| 2 | Yell. | Spl A | I/≤0,841 | 3 | 2 | — | 4 |
| | | Spl B | I/≤0,841 | 2 | 3 | — | 4 |
| 3 | Yell. | Spl A | I/≤0.841 | 10 | 1 | | |
| | Polydextrose-APM | | | 1 | 10 | | |
| | Comments: 5 noticed sourness in the cake with polydextrose. | | | | | | |
| 4 | Yell. | Granule C [$APM \cdot H_2SO_4$(1.1), Polydextrose(1) Maltrin M100(1)](5) Duratex(3) | II/≤0,841 | 3 | 5 | — | 2 |
| | | sugar | | 5 | 3 | — | 2 |

Example 7 (Cont.)

| Study No. | Cake | Composition of sweetener | Coating method / Particle size (mm) | Sweetener | Less sweet | Least sweet | Equal sweet |
|---|---|---|---|---|---|---|---|
| 5 | Choc. | Granule C(2), Duratex(3) | II/≤2,0 ≥0,841 | 2 | 7 | — | 1 |
| | | Sugar | | 7 | 2 | | |
| 6 | Choc. | Granule C(1) Duratex(1) | II/≤2,0 ≥0,841 | 6 | 1 | | |
| | | Granule D[APM(1), polydextrose (2) Maltrin M100(2)](1), Duratex(1) | II/≤0,841 | 1 | 3 | 2 | 1 |
| | | Granule D(1), Duratex(1) | II/≤2,0 ≥0,841 | | 2 | 4 | 1 |

The above results indicate

1. In baking, the stability of fat-coated $(APM \cdot H)_2SO_4 \cdot CaSO_4$ compares favorably to that of $(APM \cdot H)_2SO_4$.
2. A yellow cake made with $(APM \cdot H)_2SO_4$ coated with Durkee 17 is significantly sweeter than a polydextrose-APM yellow cake.
3. Cakes, both yellow and chocolate, made with fat-coated APM samples have sweetness and texture comparable to those of sugar cakes.
4. The chocolate cake made with coated $(APM \cdot H)_2SO_4$ is sweeter than that made with coated APM.

Example 8
Baking stability of Duratex coated non-porous APM-polydextrose granulates.

| Study No. | Cake | Composition of sweetener | Coating method<br>Particle size (mm) | APM recovery (%) | % Degradation DKP | % Relative APM recovery |
|---|---|---|---|---|---|---|
| | Yell. | ***Granule E [(APM(25), Polydextrose (15.6) Duratex (59.4)] | II/≥0,841 ≤2,0 | 70.6 | 11.0 | 86.5 |
| | Choc. | ***Granule E | II/≥0,841 ≤2,0 | 68.5 | 24.4 | 73.7 |
| | Yell. | ***Granule F [APM (34.4), Polydextrose (15.6) Duratex (40.6)] | II/≤0,841 | 73.5 | 20.6 | 78.1 |
| | Choc. | Granule F | II/≤0,841 | 63.6 | 38.2 | 62.5 |

***APM-polydextrose granules passed through 0.595 mm sieve opening.

The above results clearly indicate that larger particle size and thicker coating improve APM baking stability and these factors are particularly important for chocolate cakes.

This example demonstrates that APM dissolves significantly slower than its salts and complexes and this can be utilized as an important advantage for stabilizing APM in baking. The slow-dissolving factor can be enhanced by increasing particle size of APM. Therefore, Duratex coated APM granulates exhibit significantly better stability over Duratex coated APM powder.

Description of trademark goods

Maltrin M100 sold by Grain Processing Corporation is a spray dried hydrolyzed carbohydrate made from corn starch having a D.E. (Dextrose Equivalent) range of 9—12.

Polydextrose sold by Pfizer Chemical Division is randomly bonded condensation polymer of dextrose containing minor amounts of bound sorbital and citric acid.

Duratex sold by Durkee Industrial Foods is partially hydrogenated cottonseed triglyceride oil CMP of 61—64°C (141—147°F).

Durkee 17 sold by Durkee Industrial Foods is partially hydrogenated triglyceride soybean oil CMP 67—70°C (152—158°F).

KLX sold by Durkee Industrial Foods is partially hydrogenated vegetable oil (mixture of cottonseed and soybean oil triglycerides) CMP 51—54°C (124°—130°F).

Aratex sold by Durkee Industrial Foods is partially hydrogenated vegetable oil which is a mixture of cottonseed, soybean, and palm oil triglycerides.

Kaomel sold by Durkee Industrial Foods is partially hydrogenated vegetable oil, CMP 37—38°C (97—101°F).

Atmos K150 sold by ICI is a mixture of mono- and diglyceride fats with a melting point range 57—61°C (135—142°F).

Myverol sold by Eastman contains mainly (90%) monoglyceride fats with a melting point range 68—73°C (154—163°F).

APM-calcium complex, 1:1

Grind $CaCl_2 \cdot 2H_2O$ crystal to fine powder. Thoroughly mix well 20.0 g APM and 10.0 g $CaCl_2 \cdot 2H_2O$. Add slowly with stirring 300 ml of 200 proof alcohol preheated to ~60—70°C. The solids should be almost completely dissolved. Filter quickly by suction. Let the solution cool down to room temperature and then cool in refrigerator. Filter to collect precipitated product. Dry under vacuum and heat (~60°C) overnight.

$(APM \cdot H)_2SO_4 \cdot CaSO_4$

An amount of calcium bisulfate is dissolved or dispersed in small amount of distilled water. Alternatively, suitable amounts of calcium sulfate and sulfuric acid can be used to prepare the corresponding bisulfate, in situ, in water. An amount of APM is then added and dissolved with gentle heating and stirring. The amounts used should meet the stoichiometry of

$$APM:Ca{+}{+}:H_2SO_4=2:1:1.$$

An amount of organic solvent, such as alcohol and isopropanol, about 10 to 20 times the volume of water used, preheated to about 60°C, is then added. The product will form suddenly as crystalline precipitate after 1 to 10 minutes of gentle heating and stirring.

$(APM \cdot H)_2SO_4$

Sulfuric acid (96%, 1.66 g) was dissolved in distilled water (40 ml) and heated to about 40°. To this solution was added APM (10.0 g) and the mixture was stirred. After the ester had dissolved to produce a clear solution, ethanol (400 ml), warmed to about 60°, was added with stirring. The solution was quickly filtered and the filtrate cooled to about 5° to precipitate the sulfate salt, filtered, washed with cold ethanol and dried in a vacuum at about 50° for about 2 hours to yield about 11 g of the above-titled salt.

Examples of the sulfonate salts of the invention were prepared using the foregoing procedure and substituting the appropriate organic sulfonic acid ($RSO_3H_2$) for sulfuric acid.

## Claims

1. A sweetening composition consisting of 0,42—2,38 mm particles consisting of 1-methyl-N-L-α-aspartyl-L-phenylalanine (APM) or salts or metal complexes thereof, optionally polydextrose, and 30—90% by weight of a partially hydrogenated vegetable oil melting about 49°C (120°F) or above.

2. The composition according to Claim 1 containing APM.

3. The composition according to Claim 1 containing $(APM \cdot H)_2SO_4$.

4. The composition according to Claim 1 containing $(APM \cdot H)_2SO_3CH_3$.

5. The composition according to Claim 1 containing
$(APM \cdot H)_2SO_4 \cdot CaSO_4$, $(APM \cdot H)_2SO_42 \cdot CaSO_4$,
$(APM \cdot H)_2SO_4 \cdot MgSO_4$, or $(APM \cdot H)_2SO_4 \cdot 2MgSO_4$.

6. The composition according to Claim 1 containing $Ca^{++}(APM)2Cl^-$.

7. The composition of Claim 1 wherein the particles are 0,177—1,41 mm granules consisting of APM and optionally polydextrose which are coated with partially hydrogenated vegetable oil melting about 49°C (120°F) or above to form particles of 0,42—2,38 mm.

8. The composition according to Claim 7 wherein the uncoated particles are 0,595—1,41 mm.

9. A method for stabilizing APM characterized by coating APM granules of 0,177—1,41 mm size with partially hydrogenated vegetable oil melting about 49°C (120°F) or above to provide particles of 0,42—2,38 mm.

**Patentansprüche**

1. Süßstoffzusammensetzung bestehend aus 0,42—2,38 mm grossen Teilchen bestehend aus 1 - Methyl - N - L - α - aspartyl - L - phenylalanin (APM) oder dessen Salzen oder Metallkomplexen, gegebenenfalls Polydextrose und 30 bis 90 Gew.-% eines teilweise hydrierten Pflanzenöls mit einem Schmelzpunkt von ungefähr 49°C (120°F) oder darüber.

2. Die Zusammensetzung gemäss Anspruch 1 enthaltend APM.

3. Die Zusammensetzung gemäss Anspruch 1 enthaltend $(APM \cdot H)_2SO_4$.

4. Die Zusammensetzung gemäss Anspruch 1 enthaltend $(APM \cdot H)_2SO_3CH_3$.

5. Die Zusammensetzung gemäss Anspruch 1 enthaltend
$(APM \cdot H)_2SO_4 \cdot CaSO_4$, $(APM \cdot H)_2SO_42 \cdot CaSO_4$,
$(APM \cdot H)_2SO_4 \cdot MgSO_4$ oder $(APM \cdot H)_2SO_4 \cdot 2MgSO_4$.

6. Die Zusammensetzung gemäss Anspruch 1 enthaltend $Ca^{++}(APM)2Cl^-$.

7. Die Zusammensetzung nach Anspruch 1, worin die Teilchen 0,177—1,41 mm grosse, aus APM und gegebenenfalls Polydextrose bestehende Granulen sind, die mit partiell hydriertem Pflanzenöl mit einem Schmelzpunkt von ungefähr 49°C (120°F) oder darüber unter Bildung von Teilchen von 0,42—2,38 mm beschichtet sind.

8. Die Zusammensetzung gemäss Anspruch 7, worin die unbeschichteten Teilchen 0,595—1,41 mm gross sind.

9. Verfahren zur Stabilisierung von APM, gekennzeichnet durch das Beschichten von 0,177—1,41 mm grossen APM-Granulen mit teilweise hydriertem Pflanzenöl mit einem Schmelzpunkt von ungefähr 49°C (120°F) oder darüber unter Erzielung von Teilchen von 0,42—2,38 mm.

**Revendications**

1. Une composition édulcorante constituée de particules de 0,42—2,38 mm constituées d'ester - 1 - méthylique de la N - L - α - aspartyl - L - phénylalanine (APM) ou de sels ou de complexes métalliques de ce dernier, éventuellement du polydextrose, et 30—90% en poids d'une huile végétale partiellement hydrogénée fondant à environ 49°C ou au-dessus.

2. La composition selon la revendication 1 contenant l'APM.

3. La composition selon la revendication 1 contenant le $(AMP \cdot H)_2SO_4$.

4. La composition selon la revendication 1 contenant le $(APM \cdot H)SO_3CH_3$.

5. La composition selon la revendication 1 contenant le
$(APM \cdot H)_2SO_4 \cdot CaSO_4$, $(APM \cdot H)_2SO_42 \cdot CaSO_4$,
$(APM \cdot H)_2SO_4 \cdot MgSO_4$, ou $(APM \cdot H)_2SO_4 \cdot 2MgSO_4$.

6. La composition selon la revendication 1 contenant le $Ca^{++}(APM)2Cl^-$.

7. La composition selon la revendication 1, selon laquelle les particules sont des granulés de 0,177—1,41 mm constitués d'APM et éventuellement de polydextrose, qui sont revêtus par une huile végétale partiellement hydrogénée fondant à environ 49°C ou au-dessus pour former des particules de 0,42—2,38 mm.

8. La composition selon la revendication 7, selon laquelle les particules non revêtues sont de 0,595—1,41 mm.

9. Un procédé de stabilisation de l'APM, caractérisé par le revêtement des granulés d'APM de taille 0,177—1,41 mm par de l'huile végétale partiellement hydrogénée fondant à environ 49°C ou au-dessus pour former des particules de 0,42—2,38 mm.